Europäisches Patentamt

European Patent Office

Office européen des brevets

(19)

(11) Numéro de publication : **0 324 690 B1**

(12) ## FASCICULE DE BREVET EUROPEEN

(45) Date de publication du fascicule du brevet :
**25.03.92 Bulletin 92/13**

(51) Int. Cl.⁵ : **C03B 27/04, C03B 23/03, C03B 35/14**

(21) Numéro de dépôt : **89400090.0**

(22) Date de dépôt : **12.01.89**

(54) **Procédé et dispositif de bombage et de trempe de feuilles de verre.**

(30) Priorité : **12.01.88 FR 8800255**

(43) Date de publication de la demande :
**19.07.89 Bulletin 89/29**

(45) Mention de la délivrance du brevet :
**25.03.92 Bulletin 92/13**

(84) Etats contractants désignés :
**BE CH DE ES FR GB IT LI LU NL SE**

(56) Documents cités :
**EP-A- 0 005 306
EP-A- 0 106 758
FR-A- 993 608
FR-A- 1 238 998
GB-A- 2 178 027
LU-A- 65 146
US-A- 3 573 022
US-A- 4 043 785**

(73) Titulaire : **SAINT-GOBAIN VITRAGE
INTERNATIONAL
18, avenue d'Alsace
F-92400 Courbevoie (FR)**

(72) Inventeur : **Lissillour, Jean
26, Rue de la Fédération
F-75015 Paris (FR)**
Inventeur : **Petitcollin, Jean-Marc
12, Rue de Verdun Le Plessis Brion
F-60150 Thourotte (FR)**

(74) Mandataire : **Le Vaguerèse, Sylvain Jacques
et al
SAINT-GOBAIN RECHERCHE 39, quai Lucien
Lefranc
F-93300 Aubervilliers Cédex (FR)**

## Description

L'invention a trait aux techniques de bombage et de trempe de feuilles de verre en vue notamment de l'obtention de vitrages de sécurité en forme pour des véhicules automobiles.

Les vitrages des véhicules automobiles, à l'exception des pare-brise le plus souvent du type composite verre/plastique/verre, sont obtenus par bombage suivi d'une trempe thermique de feuilles de verre. Les procédés horizontaux, c'est-à-dire ceux où les feuilles de verre cheminent sensiblement horizontalement ont la préférence en raison des cadences élevées susceptibles d'être obtenues. Dans ces procédés, la feuille de verre traverse un four tunnel convoyée sur un lit de rouleaux pour atteindre une cellule de formage.

Conformément à l'enseignement des brevets FR-B-2 442 219, FR-B-2 549 465 et FR-A-1 476 785, la cellule de formage est par exemple constituée par un lit de rouleaux courbes ou en forme de guidon et tel qu'en progressant la feuille se déforme petit à petit jusqu'à l'obtention du galbe désiré, puis traverse une zone de trempe dans laquelle elle subit un refroidissement intense par des jets d'air froid. A cette famille de procédés de bombage/trempe sur rouleaux s'ajoute la famille des procédés utilisant une forme de bombage et dans lesquels la feuille de verre est appliquée contre une forme de bombage par des forces de pression pneumatiques (voir par exemple EP-A-169 770, FR-B-2 085 464) puis relâchée sur un squelette c'est-à-dire sur un anneau périphérique à profil courbe définissant les contours de la feuille bombée ; ce même squelette sert de support à la feuille de verre pendant l'opération ultérieure de trempe thermique.

Tous ces procédés de bombage/trempe en position horizontale trouvent leurs limites dès que les rayons de courbure des vitrages bombés sont relativement faibles, multiples (bombage cylindrique ou sphérique) ou que les vitrages bombés présentent une succession de monts et vallées (type selle de cheval). Dans ces cas, le formage par le lit de rouleaux courbes ou par les forces de pression pneumatiques s'avère incomplet et il faut procéder à un pressage complémentaire entre une forme de bombage et une contre-forme par exemple (voir EP-B-143 691 dans le cas d'un préformage par lit de rouleaux ou FR-B-2 085 464, US-A-4 661 141 pour des exemples de finition de formage par pressage après application d'une force pneumatique de pression).

Conformément aux enseignements des brevets EP-B-143 691, FR-B-2 085 464 et US-A- 4 661 141 et precités, l'anneau de pressage supporte également la feuille de verre pendant la trempe. Cet anneau cumule donc avantageusement les rôles de contre-forme de pressage, de squelette de transport de la feuille bombée non encore refroidie et de squelette de trempe. Ces multiples fonctions imposent une conception un peu bâtarde du squelette ; en effet, pour assurer une trempe de toute la surface de verre, l'air doit pouvoir s'évacuer facilement sur les bords de la surface de verre donc, le squelette sur lequel repose la feuille de verre doit être discontinu et comporter de nombreux canaux de ventilation. L'inconvénient d'un tel squelette de trempe discontinu est qu'il entraîne des risques de marquage ou de déformations optiques résultant du pressage. De plus, plus les canaux de ventilation sont nombreux (pour une trempe plus homogène des bords) plus la surface sur laquelle repose effectivement la feuille de verre est faible et plus grands sont les risques de glissement ou même de déformation et donc à nouveau de marquage du vitrage pendant les phases d'accélération ou de décélération lors de son transport du dispositif de bombage au dispositif de trempe. Un marquage du verre par le squelette peut également se produire du fait que le squelette reçoit la feuille de verre à sa température de bombage (550 - 650°C) alors que lui-même vient de subir un refroidissement intense par l'air froid envoyé sur le verre pendant la trempe. L'utilisation de matériau à faible coefficient de transfert thermique permet d'atténuer fortement cet inconvénient mais cette solution renchérit considérablement le coût des squelettes.

Enfin le squelette est utilisé pendant toute la phase de formage et surtout pendant toute la phase la plus longue à savoir la trempe. A ces deux phases s'ajoutent les temps nécessaires pour transférer le squelette de la cellule de bombage à la cellule de trempe, puis à la cellule de récupération de la feuille de verre bombée/trempée et les temps de trajet retour.

Il a été également proposé par exemple dans la demande brevet EP-A-237 231 d'opérer avec deux squelettes distincts : un squelette servant exclusivement au pressage et un squelette pour le transfert et la trempe du vitrage bombé. Mais, outre qu'elle ne règle pas les problèmes de chocs thermiques et de glissements du verre, cette manière de procéder nécessite une conception nouvelle spécifique de toute la ligne de traitement du verre en y incluant notamment une chambre d'attente et de préchauffage du squelette de pressage entre deux volumes traités.

Par ailleurs, dans le brevet FR-A-993 608, il est décrit un procédé de bombage/trempe dans lequel le formage est obtenu par effondrement d'une feuille de verre sur un socle dont la surface a une forme correspondant à la courbure à donner au verre. Le formage achevé, la feuille de verre est soulevée par des supports auxiliaires solidaires du socle afin d'introduire des caissons de soufflage mobiles de chaque côté du verre. Ce procédé présente de nombreux inconvénients : tout d'abord, celui de nécessiter des caissons de soufflage mobiles donc plus complexes, de plus la feuille de verre est marquée par les supports auxiliaires et enfin comme ces derniers sont solidaires du socle, le temps d'immobilisation de celui-ci n'est pas réduit.

L'invention a pour but un procédé de bombage et de trempe de feuilles de verre, en position horizontale obviant aux inconvénients précités des dispositifs de l'art. Dans un procédé général où la feuille de verre est échauffée en position horizontale au-delà de sa température de déformation, dans un four que la feuille de verre traverse supportée par un convoyeur, bombée dans une cellule de bombage puis transférée dans une station de trempe où elle est intensément refroidie sur ses deux faces par un soufflage d'air froid au moyen de caissons de soufflage et évacuée vers un poste de refroidissement secondaire, le transfert de l'unité de bombage à l'unité de trempe s'effectuant sur un cadre, on propose selon l'invention de soulever la feuille de verre au-dessus dudit cadre dans la station de trempe et de la faire prendre en charge par des moyens de préhension discontinus, cette opération intervenant après un laps de temps suffisant pour provoquer un raidissement de la feuille de verre.

L'invention a également pour objet un dispositif pour la mise en oeuvre du procédé énoncé plus haut, ce dispositif comportant un four, un convoyeur traversant le four, une station de bombage dans laquelle est placée une forme de bombage, une station de trempe constituée par des caissons de soufflage inférieur et supérieur, un cadre continu de transfert de la feuille de verre entre les postes de bombage et de trempe, qui est caractérisé par des moyens pour soulever la feuille de verre, dans le poste de trempe, au-dessus du cadre continu de transfert et des moyens discontinus de préhension de la feuille de verre.

Le cadre sur lequel repose la feuille de verre pendant son transfert de l'unité de bombage à l'unité de trempe peut être exclusivement réservé à ce transfert, c'est-à-dire qu'il recueille des feuilles de verre déjà bombées ou de préférence être également un outil de bombage.

Dans un premier exemple de réalisation de l'invention, ce cadre peut être par exemple un cadre de bombage dit par inertie et gravité, c'est-à-dire une forme annulaire sur laquelle la feuille de verre est déposée non encore ou seulement partiellement galbée et où elle se déforme sous l'effet de son propre poids avec éventuellement de plus un effet cinétique dû à la chute de la feuille de verre sur la forme annulaire.

Selon l'invention, ce cadre n'est immobilisé entre les caissons de soufflage de trempe que pendant un temps limité, suffisant pour que le refroidissement du verre soit tel que la feuille soit raidie. A titre indicatif pour une feuille de verre de 4 mm d'épaisseur, le soufflage de trempe dure entre 8 et 10 secondes et le procédé selon l'invention permet l'évacuation du cadre après environ 3 secondes. Dans tous les cas, il est possible d'opérer la prise en charge par les moyens discontinus au plus tard après un temps correspondant à la moitié de la durée totale du soufflage de trempe, c'est-à-dire que le cadre est immobilisé entre les caissons pendant un temps équivalent au temps de formage et de préférence pendant une durée d'environ un tiers de cette durée totale du soufflage de trempe. On gagne ainsi en cadence et de plus le cadre est moins refroidi, ce qui est favorable à la qualité du formage et à la qualité optique des vitrages.

Dans un second exemple de réalisation de l'invention, ce cadre est un cadre de pressage contre une forme de bombage pleine mâle. Typiquement, la feuille de verre est déformée par des forces pneumatiques - aspiration et/ou courant d'air ascendant - qui l'applique contre une forme mâle puis on vient appliquer le cadre qui par pressage achève de donner sa forme à la feuille de verre, cadre sur lequel la feuille de verre est ensuite conduite à la cellule de trempe.

Comme selon l'invention, la feuille de verre ne repose sur ce cadre que dans la première partie du soufflage de trempe, il n'est pas nécessaire de prévoir un cadre muni de canaux d'évacuation de l'air. On peut au contraire, utiliser un anneau de pressage continu constituant la forme femelle ce qui permet d'assurer un bombage sans marque y compris selon des formes non cylindriques. Pendant le transfert du vitrage bombé de la station de bombage à la station de trempe, cet anneau de pressage continue à assurer le soutien de toute la périphérie de la feuille de verre, sans risque de glissement et de déformations optiques. Les autres avantages précités - gain de cadence et moindre refroidissement du cadre - sont bien sûr également vérifiés.

Pendant la dernière partie de la trempe, la feuille de verre- est prise en charge par des moyens de préhension discontinus par exemple solidaires des caissons de trempe. Ils permettent à la fois le soutien de la feuille de verre et une parfaite ventilation des bords pour une trempe homogène.

Les moyens de préhension discontinus mis en oeuvre selon l'invention sont de préférence constitués par des crochets accouplés par des bielles à des tiges de vérin, fixés directement sur les caissons de trempe supérieurs, les crochets venant se placer sous la feuille de verre après qu'elle ait été soulevée au-dessus de l'anneau de pressage par exemple par un coussin d'air ou des plots de levage rigides passant au travers des caissons inférieurs de trempe et translatés selon la verticale.

Selon un mode préféré, l'anneau de pressage est évacué de la station de trempe dès que la feuille de verre est prise en charge par les moyens de préhension discontinus et n'est donc plus présent dans la station de trempe au moment de la trempe. Il est placé dans une station d'attente avant de venir prendre en charge un nouveau vitrage dans la station de bombage. Cela permet une ventilation des bords encore meilleure car sans risque d'interférence avec l'anneau de pressage. La station d'attente est de préférence à la même température que la station de bombage afin d'éviter tout problème de différence de température entre la feuille et son support.

D'autres détails et caractéristiques avantageuses de l'invention sont décrits ci-après en référence aux dessins qui représentent :

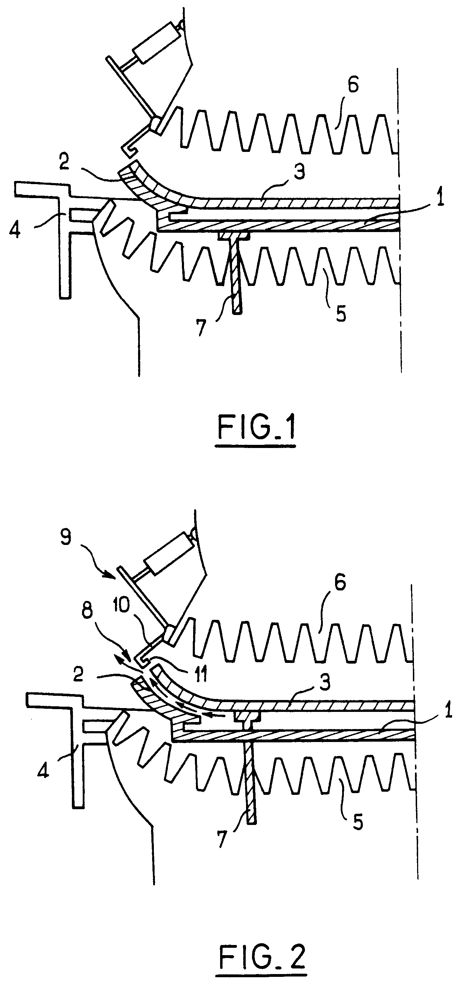

. **figure 1, 2 et 3** : des schémas des différents stades de fonctionnement du procédé selon l'invention,

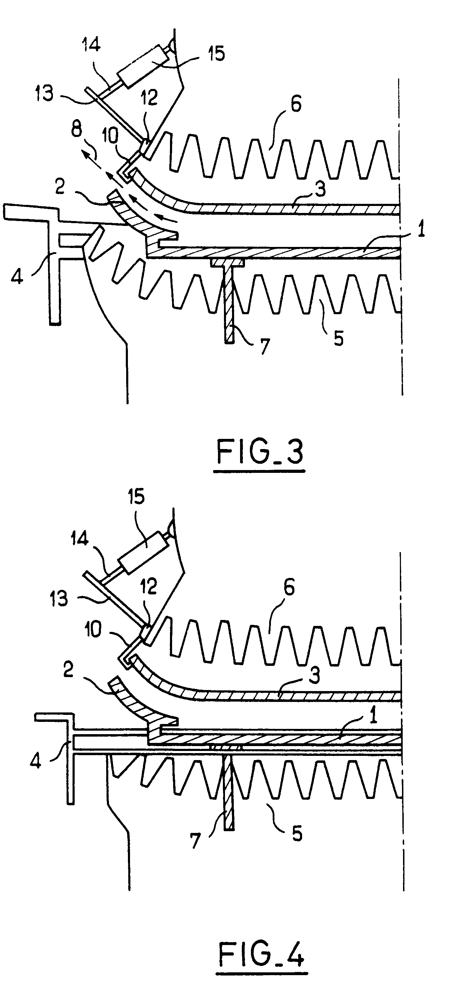

. **figure 4** : un autre mode de réalisation de l'invention.

D'une manière connue, l'invention opère à partir de feuilles de verre découpées aux dimensions souhaitées qui sont enfournées en position horizontale, manuellement ou automatiquement, par exemple suivant le brevet EP 146 442. Les feuilles traversent le four du type tunnel sur un convoyeur de préférence formé par un lit de rouleaux de silice et atteignent lorsque leur température s'élève à 500 - 700°C, une station de bombage dans laquelle elles sont par exemple tout d'abord préformées. Selon un exemple de réalisation de l'invention, le préformage est dû à une déformation idoine du lit de rouleaux puis la feuille de verre est prise en charge par une forme supérieure conformément au brevet EP 143 691. Selon un autre exemple de réalisation de l'invention, la feuille de verre est immobilisée sous une forme de bombage essentiellement pleine, soulevée par aspiration ou grâce à un courant d'air chaud ascendant et appliquée par des forces pneumatiques contre la forme de bombage. Dans ces deux cas, pour parfaire le formage et donc assurer que tous les points de la surface de la feuille épousent bien le galbe de la forme supérieure de bombage, un cadre continu vient se placer sous la feuille de verre qui est pressée entre la forme supérieure mâle pleine et ce cadre.

Suivant l'invention, le cadre continu de transfert utilisé également comme anneau de pressage présente une surface de contact avec le verre continu, sans possibilité d'évacuation latérale. Le formage est ainsi très précis.

Après pressage, la forme de bombage supérieure est relevée afin d'autoriser un déplacement latéral du cadre continu supportant la feuille de verre ; celle-ci est ainsi transférée dans une station de trempe schématisée aux figures 1 à 3 qui correspondent à des demi-vues de gauche, la partie droite étant parfaitement symétrique.

Sur ces figures, le cadre continu ou anneau de pressage 1, présentant une surface de contact 2 continue avec la feuille de verre bombée 3, est solidaire d'un chariot 4 qui vient s'encastrer dans des caissons de soufflage inférieurs 5 faisant face à des caissons de soufflage supérieurs 6. De manière connue, lesdits caissons de soufflage comportent une multitude de buses dirigées vers la surface du vitrage, réparties conformément au galbe de vitrage de façon à ce que la force d'impact des jets de courants d'air froid soit identique en tout point de la surface des feuilles de verre.

Sous l'anneau de pressage 1 sont disposés des plots d'écartement 7 mobiles selon la verticale grâce à des dispositifs de levage non représentés.

Avant que ne débute le soufflage de trempe, ou de préférence juste après son début, afin d'obtenir un léger raidissement de la feuille de verre 3, les plots 7 soulèvent la feuille de verre 3 (figure 2). Il est aussi possible d'opérer en début de trempe avec une pression de soufflage plus importante pour les caissons inférieurs 5 que pour les caissons supérieurs 6 ce qui crée un coussin d'air suffisant pour faire décoller la feuille bombée 3 de l'anneau de pressage 1.

La feuille soulevée, l'air peut s'évacuer sans difficulté sur les bords de la feuille de verre suivant les flèches 8. Toutefois, sous peine d'un marquage de la feuille 3 par les plots 7 (ou d'une trempe différente des deux faces de la feuille 3 si on opère avec une pression de soufflage différente suivant les faces de la feuille 3), ce mode de soutien de la feuille de verre ne peut être que très provisoire et pour une durée n'excédant de préférence pas 10 % de la durée totale du soufflage de trempe.

Pour relayer ce soutien provisoire, sont prévus selon l'invention des moyens de préhension 9 formés par des crochets 10 à bords plats 11 constituant un cadre discontinu épousant la forme de la feuille de verre bombée. Ces crochets 10 sont accouplés par un pivot 12, fixé sur la structure des caissons de trempe supérieurs 6, à une bielle 13 liée à la tige 14 d'un vérin 15. Dès que la feuille 3 est soulevée par les plots 7, le vérin 14 agit sur la bielle 13 de sorte que les crochets 10 viennent se positionner sous la feuille de verre qui est ainsi soutenue en autant de points que de crochets, sans que ne soit affectée la ventilation des bords de la feuille de verre.

Après la trempe, ou peu avant la fin du soufflage de trempe, les moyens de préhension 9 sont à nouveau éclipsés et la feuille retombe sur l'anneau de pressage 1 pour être évacuée vers une station de refroidissement secondaire.

La figure 4 représente un autre mode de réalisation de l'invention, différent du premier en ce sens que le chariot 4 n'est pas encastré dans le caisson de soufflage inférieur 5. Le squelette de pressage 1 peut de ce fait être évacué de la station de pressage dès que la feuille de verre est prise en charge par les moyens de préhension 9 et rangée dans une cellule d'attente à la même température que la station de bombage et intercalée entre les stations de bombage et de trempe avant de prendre en charge un nouveau volume. L'évacuation du vitrage bombé/trempé hors de la station de trempe s'effectue dans ce cas par exemple au moyen de bandes sans fin comme il est bien connu de l'homme de l'art.

Les exemples ci-dessus se réfèrent exclusivement à un procédé selon lequel le cadre est utilisé également comme cadre de pressage, mais comme indiqué au préambule de notre demande, l'invention concerne également tous les procédés de formage dans la mesure où il est utilisé un cadre pour le transfert du vitrage de la cellule de bombage à la cellule de trempe.

## Revendications

1. Procédé de bombage et de trempe de feuilles de verre en position horizontale en vue notamment de l'obtention de vitrages de sécurité en forme pour véhicules automobiles dans lequel la feuille de verre est échauffée, alors que la feuille est supportée par un convoyeur traversant le four, au-delà de sa température de déformation, en position horizontale, bombée dans une cellule de bombage puis transférée dans une station de trempe où elle est intensément refroidie sur ses deux faces par soufflage d'air froid (5, 6), le transfert de la cellule de bombage à la cellule de trempe s'effectuant sur un cadre (1, 2), **caractérisé en ce que** dans la station de trempe, après un laps de temps suffisant pour provoquer un raidissement de la feuille de verre, la feuille de verre (3) est soulevée au-dessus du cadre continu et prise en charge par des moyens de préhension discontinus (9).

2. Procédé selon la revendication 1, **caractérisé en ce que** le cadre continu (1, 2) est évacué de la station de trempe dès que la feuille de verre (3) est prise en charge par les moyens de préhension discontinus (9).

3. Procédé selon une des revendications précédentes, **caractérisé en ce que** la prise en charge de la feuille de verre par les moyens de préhension discontinus (9) s'effectue après un temps compris entre le tiers et la moitié de la durée totale du soufflage de trempe.

4. Procédé selon une des revendications précédentes, **caractérisé en ce que** le cadre continu (1, 2) est évacué de la station de trempe dès que la feuille de verre (3) est soulevée au-dessus du cadre continu de transfert (4) grâce à un coussin d'air créé à partir du caisson de soufflage inférieur (5).

5. Procédé selon une des revendications précédentes, **caractérisé en ce que** la feuille de verre (3) est soulevée au-dessus du cadre continu de transfert (4) grâce à des plots de levage (7).

6. Procédé selon une des revendications 1 à 5, **caractérisé en ce que** le cadre est un cadre de bombage par inertie et gravité.

7. Procédé suivant une des revendications 1 à 5, **caractérisé en ce que** le cadre de transfert est utilisé comme forme de pressage.

8. Procédé selon la revendication 7, **caractérisé en ce que** la forme de pressage est continue.

9. Dispositif pour la mise en oeuvre du procédé selon une des revendications précédentes comportant un four, un convoyeur traversant le four, une station de bombage dans laquelle est placée une forme de bombage, une station de trempe constituée par des caissons de soufflage inférieur (5) et supérieur (6) et un cadre continu de transfert (1, 2) de la feuille de verre (3) du poste de bombage au poste de trempe, **caractérisé en ce que** dans la station de trempe il est prévu des moyens pour soulever la feuille de verre au-dessus dudit cadre continu et des moyens discontinus de préhension de la feuille de verre dans cette position élevée.

10. Dispositif selon la revendication 9, **caractérisé en ce que** lesdits moyens discontinus de préhension sont constitués par des vérins (15) - fixés sur les caissons de trempe supérieurs (6) - dont les tiges (14) agissent sur des bielles (13) accouplées à des crochets (10).

11. Dispositif selon la revendication 9 ou 10, **caractérisé en ce que** lesdits moyens pour soulever la feuille de verre sont constitués par des plots de levage (7) traversant les caissons inférieurs de soufflage de trempe (5).

12. Dispositif selon l'une des revendications 9 à 11, **caractérisé en ce qu'**une cellule d'attente pour le cadre continu de transfert (1, 2) est prévue entre la station de bombage et la station de trempe.

## Patentansprüche

1. Verfahren zum Biegen und Vorspannen von Glasscheiben in horizontaler Stellung, insbesondere zur Herstellung von Sicherheitsscheiben für Kraftfahrzeuge, wobei die Glasscheibe, während die Scheibe von einem den Ofen durchlaufenden Förderer getragen wird, bis über ihre Verformungstemperatur in horizontaler Stellung erwärmt, in einer Biegestation gebogen und dann in eine Abschreckstation transportiert wird, wo sie durch Beblasen mit kalter Luft (5, 6) auf beiden Seiten stark abgekühlt wird, wobei der Transport von der Biegestation zur Abschreckstation auf einem Rahmen (1, 2) durchgeführt wird, **dadurch gekennzeichnet, daß** die Glasscheibe (3) in der Abschreckstation nach Verstreichen einer Zeit, die ausreicht, um ein Aussteifen der Glasscheibe zu bewirken, nach oben aus dem fortlaufenden Rahmen herausgehoben und von diskontinuierlichen Greifvorrichtungen (9) aufgenommen wird.

2. Verfahren nach Anspruch 1, **dadurch gekennzeichnet, daß** der kontinuierliche Rahmen (1, 2) aus der Abschreckstation entfernt wird, nachdem die Glasscheibe (3) von den diskontinuierlichen Greifvorrichtungen (9) übernommen wurde.

3. Verfahren nach einem der vorhergehenden Ansprüche, **dadurch gekennzeichnet, daß** das'Übernehmen der Glasscheibe durch die diskontinuierlichen Greifvorrichtungen (9) nach einer Zeitspanne, die im Bereich zwischen einem Drittel und der Hälfte der Gesamtzeit des Abschreckblasens liegt, geschieht.

4. Verfahren nach einem der vorhergehenden Ansprüche, **dadurch gekennzeichnet, daß** der kontinuierliche Rahmen (1, 2) aus der Abschreckstation entfernt wird, sobald die Glasscheibe (3) mittels eines Luftkissens, welches mittels einer untenliegenden Einblaszone (5) erzeugt wird, nach oben vom Transportrahmen (4) abgehoben wird.

5. Verfahren nach einem der vorhergehenden Ansprüche, **dadurch gekennzeichnet, daß** die Glasscheibe (3) durch Hubklötze (7) vom kontinuierlichen Transportrahmen (4) abgehoben wird.

6. Verfahren nach einem der Ansprüche 1 bis 5, **dadurch gekennzeichnet, daß** der Rahmen ein Rahmen zum Biegen durch Trägheit und Schwerkraft ist.

7. Verfahren nach einem der Ansprüche 1 bis 5, **dadurch gekennzeichnet, daß** der Transport-Rahmen als Preßform verwendet wird.

8. Verfahren nach Anspruch 7, **dadurch gekennzeichnet, daß** die Preßform kontinuierlich ist.

9. Vorrichtung zur Durchführung des Verfahrens nach einem der vorhergehenden Ansprüche mit einem Ofen, einem den Ofen durchquerenden Förderer, einer Biegestation, in der eine Biegeform angeordnet ist, eine Abschreckstation, die aus einer unteren (5) und einer oberen (6) Einblaszone und einem kontinuierlichen Transportrahmen (1, 2) für die Glasscheibe (3) von der Biegestation zur Abschreckstation besteht, **dadurch gekennzeichnet, daß** in der Abschreck-Station Vorrichtungen zum Abheben der Glasscheibe vom kontinuierlichen Rahmen nach oben und diskontinuierliche Vorrichtungen zum Greifen der Glasscheibe in dieser angehobenen Stellung vorgesehen sind.

10. Vorrichtung nach Anspruch 9, **dadurch gekennzeichnet, daß** die diskontinuierlichen Greifvorrichtungen durch Hubzylinder (15), die auf den unteren Abschreckzonen befestigt sind und deren Schaft (14) auf mit Greifern (10) gekoppelte Stangen (13) einwirkt, gebildet sind.

11. Vorrichtung nach Anspruch 9 oder 10, **dadurch gekennzeichnet, daß** die Vorrichtungen zum Abheben der Glasscheibe durch Hubklötze (7), die die unteren Einblaszonen für das Abschrecken durchqueren, gebildet sind.

12. Vorrichtung nach einem der Ansprüche 9 bis 11, **dadurch gekennzeichnet, daß** zwischen der Biegestation und der Abschreckstation ein Wartebereich für den kontinuierlichen Transportrahmen (1, 2) vorgesehen ist.

## Claims

1. Process for curving and toughening glass sheets in a horizontal position for the purpose, notably, of producing shaped safety panes for automobile vehicles, in which the glass sheet is heated, while the sheet is supported by a conveyor travelling through the furnace, to above its deformation temperature, in a horizontal position, is curved in a curving cell and is then transferred into a toughening station, where it is intensively cooled on both its faces by blowing of cold air (5, 6), the transfer from the curving cell to the toughening cell being performed on a frame (1, 2), characterized in that, in the toughening station, after a lapse of time sufficient for causing stiffening of the glass sheet, the glass sheet (3) is raised above the continuous frame and is taken over by discontinouous gripping means (9).

2. Process according to Claim 1, characterized in that the continuous frame (1, 2) is removed from the toughening station as soon as the glass sheet (3) is taken over by the discontinuous gripping means (9).

3. Process according to one of the preceding Claims, characterized in that the taking over of the glass sheet by the discontinuous gripping means (9) is effected after a time lying between one-third and one-half of the total duration of the toughening blowing.

4. Process according to one of the preceding Claims, characterized in that the continuous frame (1, 2) is removed from the toughening station as soon as the glass sheet (3) is raised above the continuous transfer frame (4) by means of an air cushion created from the lower blowing chest (5).

5. Process according to one of the preceding Claims, chracterized in that the glass sheet (3) is raised above the continuous transfer frame (4) by lifting studs (7).

6. Process according to one of Claims 1 to 5, characterized in that the frame is a frame for curving by inertia and gravity.

7. Process according to one of Claims 1 to 5, characterized in that the transfer frame is used as a pressing mould.

8. Process according to Claim 7, characterized in that the pressing mould is continuous.

9. Device for carring out the process according to one of the preceding Claims, comprising a furnace, a conveyor passing through the furnace, a curving station in which a curving mould is placed, a toughening station constituted of lower (5) and upper (6) blowing chests and a continuous transfer frame (1, 2) for transferring the glass sheet (3) from the curving station to the toughening station, characterized in that, in the toughening station, there are provided means for raising the glass sheet above said continuous frame and discontinuous means for gripping the glass sheet in this raised position.

10. Device according to Claim 9, chracterized in that said discontinuous gripping means are constituted of jacks (15) - fixed to the upper toughening chests (6) - the rods (14) of which act on connecting rods (13) coupled to hooks (10).

11. Device according to Claim 9 or 10, characterized in that said means for raising the glass sheet are constituted of lifting studs (7) passing through the lower toughening blowing chests (5).

12. Device according to one of Claims 9 to 11, characterized in that a waiting cell for the continuous transfer frame (1, 2) is provided between the curving station and the toughening station.

FIG.1

FIG.2

## FIG_3

## FIG_4